(19) Europäisches Patentamt
European Patent Office
Office européen des brevets

(11) **EP 2 168 997 A1**

(12) **EUROPEAN PATENT APPLICATION**
published in accordance with Art. 153(4) EPC

(43) Date of publication:
**31.03.2010 Bulletin 2010/13**

(21) Application number: **08790858.8**

(22) Date of filing: **04.07.2008**

(51) Int Cl.:
*C08J 5/00* (2006.01)　　*B29C 47/14* (2006.01)
*B29C 47/88* (2006.01)　*B29C 71/02* (2006.01)
*B29K 23/00* (2006.01)　*B29L 7/00* (2006.01)

(86) International application number:
**PCT/JP2008/062127**

(87) International publication number:
**WO 2009/008340 (15.01.2009 Gazette 2009/03)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.07.2007 JP 2007179108**

(71) Applicant: **Idemitsu Unitech Co. Ltd.**
**Tokyo 104-0033 (JP)**

(72) Inventors:
• **FUJIWARA, Kenichi**
**Sodegaura-shi**
**Chiba 299-0205 (JP)**
• **ODAKA, Hiroshi**
**Sodegaura-shi**
**Chiba 299-0205 (JP)**

(74) Representative: **Clarke, Lionel Paul**
**Gill Jennings & Every LLP**
**Broadgate House**
**7 Eldon Street**
**London EC2M 7LH (GB)**

(54) **POLYPROPYLENE MOLDED ARTICLE, SHEET-LIKE POLYPROPYLENE MOLDED ARTICLE, AND METHOD FOR PRODUCTION OF POLYPROPYLENE THERMALLY MOLDED ARTICLE**

(57)　A molten polypropylene having tacticity expressed in terms of an isotactic pentad fraction of 95 mol% or more is flowed. The molten-polypropylene is cooled to a temperature range of -200 degrees C to 50 degrees C and maintained at the above temperature for 0.1 second to 100 seconds, thereby providing a rapidly-cooled polypropylene higher order structure of which main constituents are a mesophase or monoclinic crystal domain having a size of 100 nm or less and an amorphous phase. The rapidly-cooled polypropylene higher order structure is heated to a temperature range in which endothermic transition occurs and that is equal to or lower than a melting temperature of polypropylene to be heat-treated.

FIG.3

## Description

## Technical Field

The present invention relates to a polypropylene molded article having tacticity expressed in terms of an isotactic pentad fraction of 95 mol% or more, a sheet-shaped polypropylene molded article for thermoforming the polypropylene molded article and a method of manufacturing a polypropylene thermoformed article.

## Background Art

Polyvinyl chloride (hereinafter, abbreviated as PVC) resins have been widely used in a field of transparent sheets. However, in recent years, a novel transparent sheet substituting for PVC resin sheets has been required due to increasing awareness of environmental issues. A sheet made of polypropylene (hereinafter, abbreviated as PP) has been attracting attentions as such a sheet.

However, since PP is a crystalline resin, PP may not provide sufficient transparency. Moreover, since a transparent sheet is mainly used for packaging various articles, a sheet base material is required to exhibit excellent properties, particularly rigidity, besides transparency.

It is generally known that an isotactic PP (hereinafter, abbreviated as i-PP) having a high tacticity is used, specifically, a molten i-PP is highly crystallized by slow cooling for obtaining a high rigidity. However, it is difficult to simultaneously obtain a high rigidity and a high transparency.

A candidate of an obstacle to transparency is a micron-sized spherulite. Higher tacticity of i-PP accelerates crystallization rate and promotes crystal growth, which results in larger spherulite. For this reason, a molten i-PP having a high tacticity contains more micron-sized spherulites even when cooled, so that transparency is likely to be deteriorated. Moreover, as for thermoformability, i-PP having a high tacticity exhibits a rapid crystallization rate, so that plastic deformation is considered difficult.

For this reason, it is known that an i-PP molded article having a high transparency can be obtained by rapidly cooling a molten i-PP. It is also known that i-PP used for this rapid cooling is treated for, for instance, delaying the crystallization rate to restrict crystal formation.

For instance, it is desirable to use a transparent amorphous PP sheet having a low crystallinity as a raw sheet in order to improve thermoformability (see, for instance, Patent Document 1). However, such a PP sheet exhibits too large deformation and thermal shrinkage due to low rigidity as a thermoforming raw sheet, so that precision in size of the molded article is reduced to hinder improvement in yield rate.

Tacticity of i-PP is limited to be equal to or lower than a certain value in order to make rapid cooling more effective (see, for instance, Patent Document 2). It is also known to use i-PP polymerized by a metallocene catalyst that exhibits comparatively slow crystallization rate although having a high tacticity (see, for instance, Patent Document 3). When i-PP of nearly 100% tacticity is used, it is known that a high transparency and a certain rigidity of the i-PP can be obtained by a particular cooling process and adding a particular additive such as a petroleum resin that restricts crystal formation and helps mesophase formation (see, for instance, Patent Document 4).

It is also known that a PP molded article having a high transparency can be obtained by, after rapid cooling, contacting a molded article with a metal roller and belt having small surface roughness to thermally treat the molded article (see, for instance, Patent Document 5). It is considered that this is because contacting a surface of an amorphous PP molded article produced by rapid cooling with a heated metal increases surface gloss thereof

Patent Document 5 discloses a method using i-PP having a low tacticity and a method of delaying a crystallization rate by blending a high tacticity PP and a low tacticity PP to lower an average tacticity.

[Patent Document 1] JP-A-2001-213976
[Patent Document 2] JP-A-11-172059
[Patent Document 3] JP-A-2004-66565
[Patent Document 4] Japanese Patent No. 3725955
[Patent Document 5] JP-A-2003-170485

## Disclosure of the Invention

## Problems to Be Solved by the Invention

However, it is difficult to provide both a higher rigidity and transparency by the typical various methods as described in the above Patent Documents 1 to 5. In other words, it is difficult to obtain a molded article having an unprecedented high-rigidity while maintaining a high transparency. It is also difficult to obtain a thermoforming raw sheet having less deformation and high precision in size when producing a thermoformed article.

In view of these points, an object of the invention is to provide a polypropylene molded article that exhibits a high transparency and an unprecedented high-rigidity, a sheet-shaped polypropylene molded article for thermoforming the polypropylene molded article and a method of manufacturing polypropylene thermoformed article.

**Means for Solving the Problems**

The inventors conducted intensive study on a higher order structure that is obtained by rapidly cooling a molten i-PP having a high tacticity and effects by heat treatment on the higher order structure. As a result, the inventors found that the invention provides a high transparency in spite of its higher order structure which is mostly occupied by crystals. Traditionally, improvement in a total haze that is obtained by contacting a rapidly-cooled i-PP molded article with a heated metal roller and metal belt is attributed to improvement in surface gloss of the molded article. However, the invention is based on the discovery that an inner higher order structure of PP having a higher tacticity is significantly changed by heat treatment into a structure expressing a higher transparency. Base on this discovery to traditional idea, the inventors have made an invention of a PP molded article having a high transparency and an unprecedented high-rigidity, which is a useful application of PP having a high tacticity which falls within a traditionally-difficult range, by only conducting rapid cooling of the molten PP over a certain level without special cooling conditions or additives.

A polypropylene molded article according to an aspect of the invention is a polypropylene molded article having tacticity expressed in terms of an isotactic pentad fraction of 95 mol% or more, including a crystallinity degree by a density method of 70% or more; and substantially no crystalline domain over 100 nm.

In the aspect of the invention, a polypropylene molded article having tacticity expressed in terms of an isotactic pentad fraction of 95 mol% or more exhibits a crystallinity degree of a density method of 70 % or more and has a higher order structure that substantially contains no crystalline domain over 100nm and is mainly formed of a nano-sized crystalline domain and an amorphous domain (hereinafter, referred to as poly-nano-domain structure).

For this reason, even when highly crystalline polypropylene having the isotactic pentad fraction of 95 mol% or more and the crystallinity degree of the density method of 70 % or more is used, both a high rigidity and a high transparency can be obtained and the rigidity can be maintained under heated conditions, thereby improving versatility.

The crystallinity degree of the density method is a value calculated from a density measured according to JIS (Japanese Industrial Standards) K 7112 D by a formula described in detail below. Substantially containing no crystalline domain over 100 nm means that transparency is not substantially decreased and does not mean that all the crystalline domain over 100 nm are excluded. Specifically, when confirmed by observing morphology formed of a crystalline phase and an amorphous phase using a transmission electron microscope (TEM), no crystalline domain over 100 nm is observed in an observation range.

A polypropylene molded article according to the aspect of the invention preferably has a structure in which the crystalline domain is formed of a granular crystal and a stacked lamellae domain in a range of 5 nm to 70 nm, preferably of 10 nm to 50 nm.

In the aspect of the invention, a crystalline domain is a granular crystal and a stacked lamellae domain in a range of 5 nm to 70 nm, preferably of 10 nm to 50 nm.

Accordingly, highly crystalline polypropylene having a high rigidity can exhibit a high transparency.

A polypropylene molded article according to the aspect of the invention is a polypropylene molded article having tacticity expressed in terms of an isotactic pentad fraction of 95 mol% or more, including a crystallinity degree by a density method of 70% or more; and substantially no crystalline domain over 100 nm.

In the aspect of the invention, a polypropylene molded article having tacticity expressed in terms of an isotactic pentad fraction of 95 mol% or more exhibits a crystallinity degree of a density method of 70 % or more and has a higher order structure that is substantially formed of crystalline domain of 100nm or less, mainly formed of nano-size crystalline domain and amorphous domain (hereinafter, referred to as poly-nano-domain structure).

For this reason, even when highly crystalline polypropylene having the isotactic pentad fraction of 95 mol% or more and the crystallinity degree of the density method of 70 % or more is used, both a high rigidity and a high transparency can be obtained and the rigidity can be maintained under heated conditions, thereby improving versatility.

A polypropylene molded article according to the aspect of the invention preferably has a structure in which a crystalline phase and an amorphous phase are main constituents and a mesophase is not substantially contained.

In the aspect of the invention, a mesophase is not substantially contained. Specifically, the mesophase is a higher order structure in which a plurality of molecular chains are simply arranged into a group or a smectic liquid crystal structure having only molecular orientation and a one-dimensional short-distance order. Accordingly, compared with $\alpha$ crystal having a three-dimensional short-distance order, the mesophase has a small elastic modulus, large orientation fluctuation of the molecular chains, and non-uniform light refractivity, so that large light scattering may hamper transparency.

Thus, a poly-nano-domain higher order structure in which a mesophase is not substantially contained can provide an unprecedented high-crystallinity degree, resulting in a polypropylene molded article having both a high transparency, which is approximately equal to typical transparency, and an unprecedented high-rigidity.

A polypropylene molded article according to the aspect of the invention preferably has the crystallinity degree by the density method in a range of 70% to 90%.

In the aspect of the invention, a crystallinity degree by a density method is set in a range of 70% to 90%.

Accordingly, the polypropylene molded article according to the aspect of the invention is mainly formed of crystalline phase, thereby providing a molded article having a high rigidity and well-balanced properties.

When the crystallinity degree is less than 70 %, rigidity may be reduced. On the other hand, when the crystallinity degree is more than 90 %, the molding article may not be practically deformed and impact resistance may be reduced. Accordingly, the crystallinity degree is set in a range of 70 % to 90 %, preferably in a range of 75 % to 90 %, more preferably 75 % to 85 %.

In the polypropylene molded article according to the aspect of the invention, a total haze is 40 % or less at a thickness of 0.1 mm to 0.55 mm, 35 % or less at a thickness of 0.1 mm to 0.45 mm, and 20 % or less at a thickness of 0.1 mm to 0.35 mm. Light transmissivity is over 90 % in each thickness. Accordingly, a molded article having high transparency approximately equivalent to that of typical molded article can be obtained.

Further, in the polypropylene molded article according to the aspect of the invention, the molded article exhibiting an unprecedented high-rigidity can be obtained, in which rigidity substantially exhibits no thickness dependence and a storage modulus showing an elastic modulus inherent to a material is in a range of 2,400 MPa to 5,000 MPa at 23 degrees C, preferably in a range of 800 MPa to 1,500 MPa at 80 degrees C and in a range of 300 MPa to 650 MPa at 120 degrees C when the storage modulus is measured as an index.

Accordingly, rigidity that is approximately 1.3 times (at 23 degrees C (ambient temperature)), 1.5 times (at 80 degrees C) and nearly twice (at 120 degrees C) as much as typical rigidity is obtained. Thus, the molded article can be used for a container for, for instance, encapsulating heating food without causing deformation, thereby improving versatility.

When the storage modulus is lower than 2,400 MPa at 23 degrees C, deformation and breakage may occur at handling operation. On the other hand, when the storage modulus is higher than 5,000 MPa at 23 degrees C, handling operation such as pulling a sheet-shaped molded article may be difficult. In the aspect of the invention, the storage modulus is set in a range of 2,400 MPa to 5,000 MPa at 23 degrees C, preferably in a range of 2,400 MPa to 4,000 MPa. In the storage modulus lower than 300 MPa at 120 degrees C, for example, when heating a content encapsulated in a molded article such as a folded box or a container, heat resistance may be hindered, e.g., deformation may occur. However, in the aspect of the invention, such a problem can be avoided because the storage modulus can be set in a range of 300 MPa to 650 MPa.

In other words, according to the aspect of the invention, a highly transparent PP molded article having a less thickness by approximately 10% while maintaining a rigidity at ambient temperature or 80 degrees C and having more rigidity at 120 degrees C compared to typical PP molded articles can be obtained. Moreover, as long as a rigidity at ambient temperature or 80 degrees C is not hampered, in the highly transparent PP molded article, the thickness can be reduced by approximately 25%, the rigidity at 120 degrees C is maintained and transparency can be improved. Further, reduction of the thickness provides reduction of cost.

The storage modulus can be obtained by measuring a dynamic viscoelasticity of the molded article as described in detail below.

A polypropylene molded article according to the aspect of the invention preferably exhibits an isotactic pentad fraction of 97 mol% or more.

In the aspect of the invention, an isotactic pentad fraction is 97 mol% or more.

Thus, use of i-PP having an extremely high isotactic pentad fraction as a raw material provides both a high rigidity and a high transparency.

In a polypropylene molded article according to the aspect of the invention, a propylene homopolymer having an isotactic pentad fraction of 95 mol% or more is preferably used as a raw resin.

In the aspect of the invention, a propylene homopolymer having an isotactic pentad fraction of 95 mol% or more is used as a raw resin.

Accordingly, both a high rigidity and a high transparency can be obtained, thereby easily providing a polypropylene molded article exhibiting a sufficient rigidity even when heated.

A polypropylene molded article according to the aspect of the invention is preferably sheet-shaped.

According to the aspect of the invention, a polypropylene molded article is sheet-shaped, which facilitates formation into, for example, a folded box and a container, thereby improving productivity of the molded article.

A polypropylene molded article according to the aspect of the invention may be formed into a container having a space thereinside.

According to the aspect of the invention, a polypropylene molded article is formed into a container having a space thereinside, thereby reliably containing foods when used as a widely-used food container due to a high rigidity, while allowing visual check of the content of the container. Further, even when foods in the container are heated, the container with the sufficient rigidity at high temperature reliably contains foods. Consequently, the polypropylene molded article according to the aspect of the invention is adapted to wide application.

A method of manufacturing a polypropylene thermoformed article according to another aspect of the invention to manufacture a polypropylene molded article having tacticity expressed in terms of an isotactic pentad fraction 95 mol% or more includes: flowing a molten polypropylene having tacticity expressed in terms of an isotactic pentad fraction of 95 mo% or more; rapidly-cooling, including, cooling the flowed molten-polypropylene obtained in the flowing to a temperature range of -200 degrees C to 50 degrees C, and keeping the cooled molten-polypropylene in the temperature range for 0.1 second to 100 seconds, thereby providing a rapidly-cooled polypropylene higher order structure of which main constituents are a mesophase or monoclinic crystal (α crystal) domain and an amorphous phase; and heat-treating, including, heating the rapidly-cooled polypropylene higher order structure to a temperature range in which endothermic transition occurs and that is equal to or lower than a melting temperature of the rapidly-cooled polypropylene higher order structure, and keeping the heated rapidly-cooled polypropylene higher order structure for 0.1 second to 1000 seconds.

In a flowing according to the aspect of the invention, a molten polypropylene having tacticity expressed in terms of an isotactic pentad fraction of 95 mol% or more is flowed. Subsequently, in a rapidly-cooling, the flowed molten-polypropylene obtained in the flowing is cooled to a temperature range of -200 degrees C to 50 degrees C; and is kept at the temperature range for 0.1 second to 100 seconds, thereby providing a rapidly-cooled polypropylene higher order structure of which main constituents are a mesophase or monoclinic crystal (α crystal) domain and an amorphous phase. Moreover, in a heat-treating, the rapidly-cooled polypropylene higher order structure is heated up to a temperature range in which endothermic transition occurs and that is equal to or lower than the melting temperature of the rapidly-cooled polypropylene higher order structure; and is kept for 0.1 second to 1000 seconds.

Accordingly, a polypropylene molded article having a high rigidity and a high transparency having a crystallinity degree by a density method of 70% or more and substantially containing no crystalline domain over 100 nm can be obtained.

In the rapidly-cooling in the method of manufacturing the polypropylene thermoformed article according to the aspect of the invention, the molten polypropylene is preferably rapidly cooled to a temperature range of -200 degrees C to 30 degrees C.

In the aspect of the invention, the molten polypropylene is rapidly cooled to a temperature range of -200 degrees C to 30 degrees C in the rapidly-cooling.

Accordingly, the poly-nano-domain structure formed of an amorphous phase and a nano-sized mesophase is obtained. Morphology of this poly-nano-domain structure is substantially maintained even after the subsequent heat-treating, resulting in producing substantially no crystalline domain over 100 nm and providing a polypropylene molded article having a high rigidity and a high transparency.

In the heat-treating in the method of manufacturing the polypropylene thermoformed article according to the aspect of the invention, the temperature range in which endothermic transition occurs is preferably 110 degrees C or more and the melting temperature of the polypropylene is preferably 150 degrees C or less.

In the aspect of the invention, a temperature range in which endothermic transition occurs is 110 degrees C or more and a melting temperature of polypropylene is 150 degrees C or less in the heat-treating.

Accordingly, no crystalline domain over 100 nm is substantially produced, thereby providing a polypropylene molded article having a high rigidity and a high transparency.

Further, in the method of manufacturing the polypropylene thermoformed article according to the aspect of the invention, the heat-treating can be followed by a thermoforming in which the heat-treated sheet-shaped polypropylene molded article that is obtained in the heat-treating is thermoformed.

In the aspect of the invention, when the sheet-shaped polypropylene molded article obtained after heat-treating is formed into a molded article having a three-dimensional shape (e.g, concavo-convex shape and a container shape), the sheet-shaped polypropylene molded article is thermoformed in a thermoforming temperature range in which endothermic transition occurs and is equal to or lower than a melting temperature of the heat-treated polypropylene molded article.

In other words, the polypropylene molded article is not formed into a sheet or a container in the heat-treating, but the polypropylene molded article obtained by the heat treating is further thermoformed.

Consequently, a highly transparent polypropylene molded article having a crystallinity degree of 70 % or more can be easily obtained while avoiding warpage and deformation of the raw sheet which often occur at typical thermoforming and having a high precision in size of the final article.

Accordingly, when the polypropylene molded article is formed into a thermoformed article such as a folded box and a container, a sufficient rigidity can be obtained and visibility of the content is improved due to a high transparency.


**Brief Description of Drawings**


   Fig. 1 is a schematic view of an apparatus used in a manufacturing method according to an exemplary embodiment of the invention.

Fig. 2 shows a TEM observation image at hundred thousand-fold magnification of a cross sectional view in a thermoformed container in Example 12 for explaining the invention.
Fig. 3 is a graph showing changes of a total haze between isotactic pentad fractions and heat treatment.

**Explanation of Codes**

11: Polypropylene resin sheet that is a polypropylene molded article

**Best Mode for Carrying Out the Invention**

Exemplary embodiment(s) of a polypropylene molded article of the invention will be described below.

[Structure of Polypropylene Molded Articles]

A polypropylene molded article according to an aspect of the invention is a so-called isotactic polypropylene (hereinafter, abbreviated as i-PP) molded article in which a lower limit value of an isotactic pentad fraction is 95 mol% or more, preferably 97 mol% or more. In the aspect of the invention, an upper limit value of the isotactic pentad fraction is not particularly limited, but, for instance, 99.99 mole% or less, preferably 99.95 mol% or less.
Herein, the isotactic pentad fraction is of a pentad unit (an isotactic bonding of five continuous propylene monomers) contained in a polypropylene molecule chain of a resin composition. A measuring method of the fraction is described in, for instance, "Macromolecules" Vol. 8, p. 687 (1975). The fraction is measured by using $^{13}$C-NMR. The i-PP molded article according to the aspect of the invention exhibits a high transparency and an excellent rigidity. Since a higher isotactic pentad fraction results in a higher rigidity, the isotactic pentad fraction is preferably higher.
A higher order structure of the i-PP molded article according to the aspect of the invention includes a crystalline phase and an amorphous phase. Specifically, in Wide-Angle X-ray Diffraction (WAXD), the i-PP molded article includes two phases, i.e., the crystalline phase in a range of 70 % to 99.9% and the amorphous phase in a range of 0.1 % to 30 %, the crystalline phase being substantially formed of a monoclinic crystal (hereinafter, described as $\alpha$ crystal). The i-PP molded article according to the aspect of the invention preferably includes $\alpha$ crystal phase in a range of 75 % to 99.5 % and substantially includes no mesophase. The absence of mesophase can be confirmed by X-ray diffraction. The crystalline phase may additionally include hexagonal crystal ($\beta$ crystal) and triclinic crystal ($\gamma$ crystal).
Moreover, in the higher order structure of the i-PP molded article according to the aspect of the invention, the lower limit value of crystallinity degree by the density method is 70 % or more, preferably 75 % or more. The upper limit of the crystallinity degree is not particularly limited, but, for instance, 90 % or less, preferably 85 % or less. In a range of the above crystallinity degree, suitable plastic deformation can be obtained as well as a high rigidity.
Moreover, it is preferable that the crystalline phase entirely exists in a substantially uniform manner through the amorphous phase. This arrangement is favorable because the molded article obtains higher transparency. Additionally, this arrangement is favorable because uneven thickness caused by thermoforming is small, resulting in a uniform thickness distribution in the thermoformed container.
The crystalline phase may exist as a stacked lamellae domain in an overall uniform manner through the amorphous phase. Herein, the stacked lamellae mean a structure where plate crystals (hereinafter, referred to as "crystal lamellae") are oriented in the same direction. However, the crystal lamellae herein do not necessarily mean a folded chain of "crystal lamellae," which is established in a field of crystalline polymer, and a stacked structure thereof In the crystalline phase, crystal lamellae having the same orientation are stacked in a manner to have an amorphous part therebetween. Aggregation of such crystal lamellae having the same orientation is recognized as one domain, providing a stacked lamellae domain. Each stacked lamellae domain has its own orientation and exists in an overall uniform manner through an amorphous phase. Incidentally, all the stacked lamellae domains may have the same orientation.
The higher order structure of the i-PP molded article according to the aspect of the invention does not substantially include a spherulite and a stacked lamellae domain over 100 nm. In other words, a size of the structure of the i-PP molded article according to the aspect of the invention is 100 nm or less, preferably 70 nm or less. The lower limit value of the structure is not particularly limited, but, for instance, 1 nm or more, or 5 nm or more.
The absence of spherulite and a stacked lamellae domain over 100 nm can be confirmed by: confirming absence of a spherulite of some $\mu$ m or more by a polarization optical microscope; and then scanning a thin film cut-out dyed with $RuO_4$ three or four times from a surface of each molded article toward the center thereof by Transmission Electron Microscope (TEM) (2000-fold magnification). Actual size of the crystalline structure can be confirmed by observing morphology of a stacked lamellae domain formed of an achromatic crystalline phase and a stained amorphous phase by TEM having magnification of a hundred thousand-fold to two hundred thousand-fold.
The size of the structure herein means a figure that is obtained by observation with a Transmission Electron Microscope (TEM) as described above. Accordingly, the size of the structure is not always same as a figure range of a scatterer size calculated based on Small-Angle Light Scattering (SALS).

Since the i-PP molded article according to the aspect of the invention has the poly-nano-domain higher order structure formed of nano-order structure as described above, a high transparency can be achieved in spite of a high crystallinity degree. Typical i-PP molded articles having a high crystallinity degree exhibit a low transparency. This is because a large domain causes adverse influence such as light scattering.

The reason that the i-PP molded article according to the aspect of the invention can exhibit a high transparency in spite of a high crystallinity degree is that, in the i-PP molded article according to the aspect of the invention, which is obtained by heat-treating a rapid-cooled PP, a mesophase is transformed into α crystal after the heat treatment, thereby reducing partial orientation-fluctuation of molecular chains. As a result, filling conditions of the molecular chains are uniformized to provide a uniform refractive index in the entire structure, thereby providing a high transparency.

In the higher order structure of the i-PP molded article according to the aspect of the invention, the upper limit value of a long period that is obtained by, for instance, Small-Angle X-ray Scattering (SAXS) is 100 nm or less, preferably 70 nm or less. The lower limit value of the long period is not particularly limited, but is, for instance, 1 nm or more, particularly 5 nm or more.

However, in the i-PP molded article according to the aspect of the invention, a peak of scattering intensity is not so clear as that of the higher order structure including spherulites and may not include the long period. For this reason, thought speculatively, transparency can be further improved. Moreover, anisotropy is not recognized in the scattering intensity of SAXS and orientations of molecular chains in crystalline nano-domain are not related to each other but in disorder. This is not necessarily related to transparency of the molded article.

The total haze of the i-PP molded article according to the aspect of the invention is 40 % or less at a thickness of 0.1 mm to 0.55 mm, 35 % or less at a thickness of 0.1 mm to 0.45 mm, and 20 % or less at a thickness of 0.1 mm to 0.35 mm. Light transmissivity is over 90 % in each thickness. As a result, a molded article having a high transparency approximately equivalent to that of typical molded article can be obtained.

The storage modulus of the i-PP molded article according to the aspect of the invention is in a range of 2,400 MPa to 5,000 MPa at 23 degrees C, particularly in a range of 2,400 MPa to 4,000 MPa. Further, the storage modulus of the i-PP molded article according to the aspect of the invention is in a range of 800 MPa to 1500 MPa at 80 degrees C, in a range of 300 MPa to 650 MPa at 120 degrees C, particularly in a range of 250 MPa to 600 MPa.

When the storage modulus is in the above range, the thickness and size of the molded article can be reduced as compared with typical molded articles. For instance, when a sheet-shaped molded article is used as a folded box such as a cosmetic box and a thermoformed article is used as a container for foods, medical devices and the like, a thickness of these molded articles can be reduced. Moreover, resistance to pressure sterilization at 120 degrees C or more can be enhanced. Shape retention can also be enhanced under high temperature. For instance, shape retention is enhanced after heated by a microwave. An upper limit value of the storage modulus at 23 degrees C is not particularly limited, but is not preferably over the upper limit value as described above. This is because, for example, handling operation such as winding of a sheet-shaped molded article during manufacturing process may become difficult.

The i-PP molded article according to the aspect of the invention may contain at least one of a nucleating agent and a petroleum resin. Any organic substance and any inorganic substance may be used as the nucleating agent. Moreover, any polyolefin such as Linear Low Density Polyethylene (LLDPE) may be blended.

The nucleating agent are preferably organic, examples of which include dibenzylidene sorbitol compounds and phosphate compounds. Examples of dibenzylidene sorbitol compounds are dibenzylidene sorbitol (hereinafter, abbreviated as DBS), para-methyl-DBS, para-ethyl-DBS and para-chloro-DBS. The DBS-based compounds are effective particularly for improving transparency. Examples of phosphate compounds are sodium bis(4-t-butylphenyl) phosphate and sodium-2,2'-methylenebis(4,6-di-t-butylphenyl) phosphate.

Other nucleating agents may be aluminum dibenzoate, basic di-para-tertiary-butyl aluminum dibenzoate, beta-naphthoic acid soda, caproic acid soda, phosphate-2,2'-methylenebis(4,6-di-tertiary-butylphenyl)soda, phthalocyanine, quinacridone, a high-melting-point polymer and the like.

When the nucleating agent is contained, a content thereof is, for instance, in a range of 0.02 to 1.0 weight parts, preferably in a range of 0.04 to 0.5 weight parts relative to 100 weight parts of polypropylene base material. When the content of the nucleating agent is within the above range, a sufficient transparency is obtained. When the content of the nucleating agent is beyond the above range, the nucleating agent is not so effective for improving transparency, so that it costs too much for the effect.

Examples of the petroleum resin are a $C_5$ petroleum resin and a terpene petroleum resin. The $C_5$ petroleum resin is a mixed copolymer containing isoprene, 2-methyl-1-butene, 2-methyl-2-butene, piperylene and the like. The terpene petroleum resin is a mixed copolymer containing α-pinene, β-pinene, dipenten (limonene) and the like. A hydrogen additive of these petroleum resins may be used in order to improve color tone and resistance to climatic conditions. When the petroleum resin is contained, a content thereof is, for instance, in a range of 3 to 30 weight parts relative to 100 weight parts of a polypropylene base material. When the content of the petroleum resin is within the above range, thermoformability (drawing property), transparency and the like are sufficiently improved and embrittlement of a sheet can be avoided.

Further, the polypropylene molded article according to the aspect of the invention may be added with an antistatic agent, antifog additive, stabilizer, lubricant, coloring agent and the like as required.

[Manufacturing of Polypropylene Molded Articles]

Next, a manufacturing method of the i-PP molded article according to the aspect of the invention will be described.

The i-PP molded article according to the aspect of the invention is obtained from polypropylene homopolymer (a raw material resin) having an isotactic pentad fraction of 95 mol% or more. The i-PP molded article according to the aspect of the invention is exemplarily obtained by flowing, rapidly-cooling and heat-treating polypropylene.

In a flowing, for instance, an apparatus in which a typical single screw extruder is attached with a flat T-die or circular die is usable.

In the flowing, molten polypropylene is flowed by, for instance, shearing flow in the die, stretching flow drawn down from a die outlet, or both thereof

Herein, important factors for controlling the flowing are Draw Down Ratio (Rd) and an average stretching-strain rate $\blacktriangle\varepsilon\blacktriangledown$, which are defined by formulae (1) and (2) below.

$$Rd=V/V_0 \quad \cdots(1)$$

$$\blacktriangle\varepsilon\blacktriangledown=V/V_0/La \quad \cdots(2)$$

In the above formulae, $V_0$ represents an extruding speed of molten PP, V represents a pulling speed of a molded sheet and La represents air gap. $V_0$ can be calculated from a lip gap of the die, a width thereof and an extruded amount of molten PP. Rd is 2 or more, preferably 3 or more. The stretching strain rate $\blacktriangle\varepsilon\blacktriangledown$ is 0.1 Osec$^{-1}$, or more preferably 0.15 sec$^{-1}$ or more. The upper limit values of the Draw Down Ratio (Rd) and the average stretching-strain rate $\blacktriangle\varepsilon\blacktriangledown$ are not limited, but preferably 20 or less and 10sec$^{-1}$ or less respectively.

During a rapidly-cooling of the exemplary embodiment, molten PP is in contact with a cooling medium for a predetermined period of time (cooling time) at a temperature from $T_0$ to $T_c$. Herein, a temperature of molten PP at the die outlet in the above flowing is $T_0$ and a temperature of the cooling medium in initial contact with molten PP in the rapidly-cooling is a cooling temperature $T_c$.

Specifically, molten PP is inserted between a metal cooling belt and a metal cooling roller that are maintained at the predetermined temperature $T_c$ to be contacted with the both, whereby molten PP is cooled down.

In the rapidly-cooling, molten PP after the flowing is rapidly cooled down under the conditions such that mesophase of 100 nm or less is produced.

Cooling temperature, cooling rate and cooling time are significant elements in order to obtain poly-nano-domain structure according to the aspect of the invention.

Herein, the cooling time $t_c$ is a period of time when molten PP remains in contact with the cooling medium. In this exemplary embodiment, the cooling time is defined as the time for PP to pass through a section interposed between the metal roller and the metal belt opposite to each other.

Molten PP is cooled down at the cooling rate of, for instance, 80 degrees C/second or more, preferably in a range of 100 degrees C/second to 1,000 degrees C/second. Alternatively, molten PP is maintained at a certain cooling temperature for a certain period of time. Specifically, molten PP is cooled at the cooling temperature ranging from -200 degrees C to 50 degrees C, preferably from -100 degrees C to 50 degrees C, more preferably from -50 degrees C to 50 degrees C, and is maintained for a range of 0.1 second to 1,000 seconds. Thus, rapidly-cooled polypropylene formed of a mesophase and an amorphous phase is obtained.

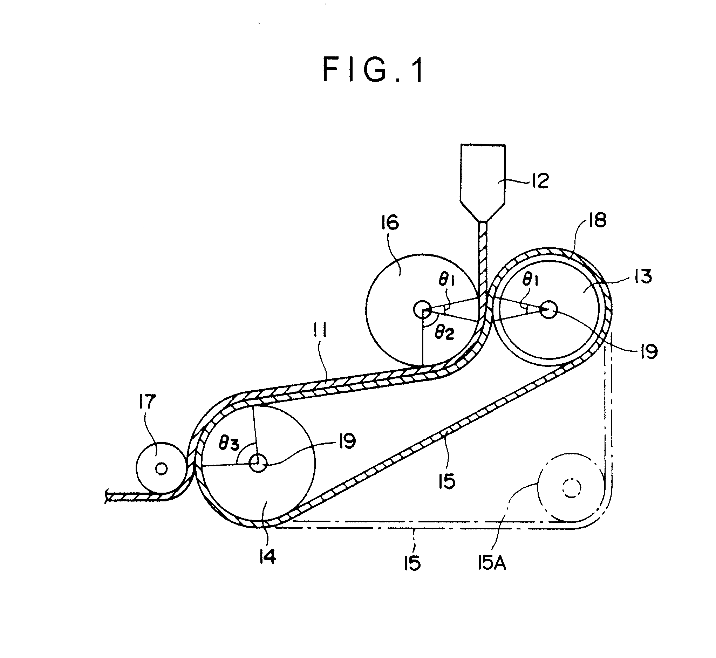

In the rapidly-cooling, for instance, a cooling apparatus in which a metal belt 15 and cooling rollers 13, 14, 16, 17 are combined (shown in Fig. 1) can be used. Molten polypropylene is extruded from T-die 12 at a predetermined rate and inserted between a metal roller 16 (a third cooling roller) and the metal belt 15 that are kept at a predetermined temperature, whereby molten PP is cooled down.

Incidentally, a water-cooling method that is traditionally known and a cooling apparatus and a cooling method disclosed in, for instance, JP-A-2004-188868, JP-A-2004-66565, and JP-T-11-508501 can be used. Moreover, tubular molten PP that is extruded from a circular die may be rapidly cooled by being immersed in a water bath.

A sheet-shaped molded article obtained after the cooling is subjected to a heat-treating, in which the sheet-shaped molded article is heated up to a predetermined temperature by any combination of any methods of hot-air heating, steam heating, IR heating and contact heating with metals and is kept at the above temperature for a certain period of time. The controlling factors in the heat-treating are temperature profiles in terms of heatup rate, maximum temperature and heatup time. Among the temperature profiles, maximum temperature and time for heat treatment are particularly significant. A pre-heat-treating may be provided prior to the predetermined heat treatment.

In the heat-treating, the heat treatment is conducted under conditions that a mesophase of the rapidly-cooled PP is substantially transformed into α crystal not to form a stacked lamellae domain over 100 nm.

The heatup rate under such conditions is not particularly limited, but desirably 0.1 degrees C/second or more. Preferably, the rapidly-cooled polypropylene is heat-treated at the heatup rate of 0.1 degrees C/second to 400 degrees C/second. Alternatively, for instance, the rapidly-cooled polypropylene is heated up to a temperature range in which endothermic transition occurs and that is equal to or lower than a melting temperature of a PP molded article to be heat-treated.

Further specifically, the rapidly-cooled polypropylene is maintained in the above temperature range for 0.1 second to 1,000 seconds, preferably for 1 second to 300 seconds.

The temperature range in which endothermic transition occurs can be confirmed by a Differential Scanning Calorimeter (DSC) or a shape of a heating-time dependence curve on a surface temperature of the molded article.

When DSC is used, in a DSC curve that is obtained by heating the rapidly-cooled sheet, endotherm starts around 40 degrees C, subsequently exothermic curve is shown and another slow endothermic curve is shown again. The temperature range in which endothermic transition occurs can be confirmed by the temperature range shown by this another endothermic curve.

When the shape of the heating-time dependence curve is used for confirmation, the temperature range in which endothermic transition occurs can be specifically confirmed as follows. After heatup starts, the surface temperature of the PP sheet is linearly increased at first. Herein, a temperature range where inclination of the surface temperature of the PP sheet to heatup time becomes small exists. Such a temperature range is defined as a temperature range in which endothermic transition occurs. The temperature range in which endothermic transition occurs is, for instance, 100 degrees C or more, preferably 110 degrees C or more, further preferably 130 degrees C. Moreover, an upper limit value in the heat-treating is preferably is equal to or lower than the melting temperature of polypropylene.

The melting temperature of the PP molded article is a value measured by a microthermal analysis as described below and shows a lower value in accordance with increase in the heatup rate. For instance, the melting temperature of the rapidly-cooled polypropylene molded article in the Example 12 below is 154 degrees C at 0.3 degree C/second, 147 degrees C at 7 degrees C/second, 146 degrees C at 13 degrees C/second and 145 degrees C at 25 degrees C/second.

In this exemplary embodiment, the heat treatment may be conducted at various heatup rates. For instance, the rapidly-cooled polypropylene molded article is heated up to 100 degrees C at 19 degrees C/second, subsequently further heated up in a range of 121 degrees C to 127 degrees C at 5 degrees C/second. The heat treatment is conducted in a range of 2.0 seconds to 3.5 seconds in total. It has been found that the melting temperature of the rapidly-cooled PP molded article is decreased in accordance with increase in the heatup rate. For this reason, in a heatup method such as radiation heatup (e.g., infrared radiation) and contact heatup with metals, in which a heatup rate is rapid, a heat treatment can be conducted at a temperature lower than the generally-known crystal melting temperature of PP (in a range of 160 degrees C less than 170 degrees) by DSC measurement by around in a range of 10 degrees C to 20 degrees C. It should be noted that this merit is applicable as required.

When the heat treatment is conducted at the temperature range that is equal to or lower than the melting temperature, transparency is improved. However, since a molded article is highly crystallized, it is conventionally considered that thermofomation is difficult or impossible in a vacuum or at a low pressure equivalent to a vacuum pressure which are typically used.

In this exemplary embodiment, even when the heat treatment is conducted in the temperature range that is equal to or lower than the melting temperature and in which endothermic transition occurs, thermoformability is not hampered, so that thermoforming is possible. It is assumed that this is because a poly-nano-domain higher order structure obtained after the cooling is substantially maintained even after the heat treatment.

In this exemplary embodiment, the heat treatment conducted in the above temperature range provides a certain rigidity to the sheet. Accordingly, deformation such as slack or strain can be restrained until thermoforming and thermoforming is possible using typical vacuum/vacuum pressure moldings, whereby favorable thermoformability is obtained.

Next, an exemplary arrangement of a manufacturing apparatus of a polypropylene resin sheet 11 is shown in Fig. 1. A manufacturing method of the polypropylene resin sheet 11 using the manufacturing apparatus will be described. However, the manufacturing apparatus shown in Fig. 1 is not limitative, but various methods are usable for sheet molding. In a method of the exemplary embodiment, molten polypropylene is rapidly cooled down in a predetermined temperature range, followed by further heat treatment in a predetermined temperature range. The nano-higher order structure after the cooling is maintained even after the heat treatment, whereby an i-PP molded article exhibiting high transparency and high rigidity can be obtained. Moreover, even in a high crystallinity degree, i-PP can be thermoformed.

First, a rapidly-cooling is conducted in which a molten polypropylene resin sheet is rapidly cooled down in the predetermined temperature range.

The resin sheet in the exemplary embodiments includes a resin film that differs from the resin sheet only in the thickness thereof

A first cooling roller 13, a second cooling roller 14 and a third cooling roller 16 are thermally controlled so that a surface temperature of a metal endless belt 15 and the third cooling roller 16 that are in contact with the polypropylene resin sheet 11 is kept at a predetermined temperature.

As shown by the dashed-dotted line in Fig. 1, another cooling roller 15A may be provided upstream of the first roller 13 in a manner contacting with the inner side of the endless belt 15 in order to further cool the endless belt 15.

Then, the polypropylene resin sheet 11 that is extruded by the T-die 12 of the extruder is introduced between the first cooling roller 13 and third cooling rollers 16 in such a manner that the polypropylene resin sheet 11 substantially simultaneously contacts with the endless belt 15 contacting with the first cooling roller 13 and with the third cooling roller 16. A surface of the first cooling roller 13 is covered with an elastic material 18. The metal endless belt 15 and third cooling roller 16 preferably have a mirror-finished surface with a surface roughness of 0.5 S or less.

The polypropylene resin sheet 11 is pressed against the first cooling roller 13 and the third cooling roller 16 to be cooled to the predetermined temperature or lower. Thus, pressing and cooling of the polypropylene resin sheet 11 can be conducted simultaneously, whereby enhancing transparency of the polypropylene resin sheet 11. At this time, the elastic material 18 is pressed by pressing force between the first cooling roller 13 and the third cooling roller 16 to be elastically deformed, so that the polypropylene resin sheet 11 is sheet-pressed by the cooling rollers 13 and 16.

Subsequently, the polypropylene resin sheet 11 is pressed against the third cooling roller 16 by the endless belt 15 having the mirror-finished surface to be cooled to a predetermined temperature or lower.

The polypropylene resin sheet 11 that is pressed by the endless belt 15 toward the third cooling roller 16 is sheet-pressed by the endless belt 15 and the third cooling roller 16.

At this time, the sheet-pressure is, for instance, in a range of 0.01 MPa to 0.5 MPa, preferably in a range of 0.01 MPa to 0.1 MPa. The pressure between the cooling rollers 13 and 16 is in a range of 2 kg/cm to 400 kg/cm at linear pressure.

When the sheet-pressure between the third cooling roller 16 and the endless belt 15 is equal to or more than the above-described lower limit value, favorable transfer of the mirror-finished surface and cooling effect can be obtained. Moreover, the sheet-pressure is preferably equal to or less than the above-described upper limit value in order to prevent a belt tension from becoming excessively high and to prevent a belt life-time from being shortened.

Next, the polypropylene resin sheet 11 is moved toward the second cooling roller 14 along with rotation of the endless belt 15 in a manner overlapping on and along the endless belt 15.

The polypropylene resin sheet 11 is pressed against the second cooling roller 14 by the endless belt 15 to be cooled to the predetermined temperature or lower. The polypropylene resin sheet 11 that is guided by a fourth cooling roller 17 and pressed toward the second cooling roller 14 is sheet-pressed by the endless belt 15. At this time, the sheet-pressure is, for instance, in a range of 0.01 MPa to 0.5 MPa.

Subsequently, a heat-treating is conducted by using a heat treatment apparatus (not shown). The heat-treating mainly includes the following two types.

In a first type, a sheet-shaped molded article, which is a rapidly-cooled polypropylene obtained in the above-described rapidly-cooling, is heat-treated in a heatup to provide a heat-treated sheet. In this case, the sheet-shaped molded article is used for, for instance, a folded box as the heat-treated sheet.

In a second type, after some heat-treating is applied on a sheet-shaped molded article obtained in the rapidly-cooling while a shape thereof is maintained, a predetermined thermoforming is further provided thereto.

Examples of the former method in which heat treatment is conducted while maintaining the sheet shape are: using a hot-air furnace kept at a predetermined ambient temperature; heating by contacting with solids (metals) and liquids (oils); using a radiant heater such as infrared radiation; and using steam at 80 degrees C to 150 degrees C.

Moreover, in heat treatment by using the hot-air furnace, humidity in the air-heating furnace can be selected from any values in a range of a dried state to saturated vapor pressure.

However, the method of heat treatment is not limited to these methods.

A sheet-shaped polypropylene molded article can be obtained by such heat-treating.

In the latter heat-treating, a polypropylene sheet is heat-treated by passing through the hot-air furnace within a predetermined time. Subsequently, the heat-treated polypropylene sheet is further thermoformed to be heat-treated during the heatup. After that, the heat-treated polypropylene sheet is formed, i.e., thermoformed into a shape of a container and the like by using a predetermined-shape die.

[Advantages of Embodiments]

As described above, according to this exemplary embodiment, polypropylene having a high crystallinity degree and a high rigidity can be manufactured at a high rate as a polypropylene resin sheet 11 having a high transparency after being rapidly cooled in a predetermined temperature range and heat treatment in a predetermined temperature range.

Particularly, by cooling molten polypropylene having tacticity of isotactic pentad fraction of 95 % by mole or more under predetermined conditions, followed by heat treatment on the molten polypropylene in a predetermined heat-treating, a thermoformed polypropylene having a further higher rigidity can be provided while maintaining transparency as high as typical polypropylene.

Moreover, rigidity at high temperature can be extremely increased, thereby providing a useful thermoformed article.

Further, a thickness can be reduced while rigidity at ambient temperature or 80 degrees C is maintained. Thus, according to a purpose and a usage of the thermoformed article, cost reduction can be achieved by reducing the thickness of the thermoformed article.

[Modifications of Embodiments]

Exemplary embodiments of the invention as described above are examples of the invention. Various arrangements in addition to the above are applicable.

For instance, a cooling apparatus in a combination of a metal belt and a metal roller is used in the above exemplary embodiments. However, a cooling apparatus in a combination of two metal rollers, or in a combination of two metal belts is applicable.

Further, as a molding method of a molded article, various molding methods generally used for thermal plastic polymers such as injection molding and blow molding in addition to extrusion molding can be used.

[Examples]

Now, an aspect of the invention will be described in more detail with examples and comparisons.

The aspect of the invention is not limited to details of the examples. In the manufacturing apparatus 1 (Fig. 1) and the manufacturing method in the above exemplary embodiment, conditions are specified as follows.

[Measurement of Isotactic Pentad Fraction]

An isotactic pentad fraction used as an index for tacticity of i-PP in the aspect of the invention was measured according to $^{13}$C-NMR method (Macromolecules,6925,1973) disclosed by A. Zambelli. Specifically, first, 220 mg of i-PP sample was put into an NMR sample tube having a 10-mm diameter. To this, 2.5 ml of a mixture solution of 1,2,4-trichlorobenzene/bibenzene (90/10vol%) was added and uniformly dissolved at 140 degrees C. Subsequently, $^{13}$C-NMR spectrum was measured by using JNM-EX400 (product name: manufactured by JEOL Ltd.). Measuring conditions for $^{13}$C-NMR spectrum are shown as follows.

Pulse Width: 7.5 $\mu$s/45 degrees
Observing Frequency Range: 25,000 Hz
Pulse Repetition Time: 4 seconds
Measuring Temperature: 130 degrees C
Number of Integrations: 10,000 times

The isotactic pentad fraction was defined as a relative ratio of a peak area corresponding to "mmmm" to all areas of nine peaks observed as $^{13}$C-NMR spectrum respectively corresponding to nine binding patterns of five molecules in propylene ("mmmm," "mmmr," "rmmr," "mmrr," "rmrr+mrmm," "rmrm," "rrrr," "mrrr" and "mrrm"). Specifically, the isotactic pentad fraction was calculated by a formula (3) below. When two peaks were overlapped, a perpendicular line was drawn perpendicularly to a base line from a turning point between two peaks to divide the both peaks (vertical partitioning).

$$[\text{Isotactic Pentad Fraction (mol\%)}]$$

$$= A(mmmm)/A(Total) \times 100 \cdots (3)$$

A(mmmm) is an area of mmmm peak. A(Total) means a total of nine peak-areas.

When two peaks are overlapped, a method in which waveform separation is conducted on each peak as a Lorentz peak group is known besides the vertical partitioning. Values obtained by an analysis software (product name: ALICE 2 manufactured by JEOL Ltd.) are indicated below.

When homo isotactic polypropylene (I-PP), for instance, having an isotactic pentad fraction of 97 mol% (product name: prime polypro F-300SV (MFR 3 g/10 minutes, lot. 2602671)) manufactured by Prime Polymer Co., Ltd.) or having an isotactic pentad fraction of 92 mol% (product name: prime polypro E-304GP (MFR 3 g/10 minutes, lot. 2605231)) manufactured by Prime Polymer Co., Ltd.) was used as a raw material, a value obtained by waveform separation is 97.9 mol% in prime polypro F-300SV and 92.5 mol% in prime polypro E-304GP.

[Transmission Electron Microscope (TEM)]

Sample Preparation

A cut-out piece of a sheet-shaped molded article or a thermoformed container was cross-sectionally thinned by an ultramicrotome (product name: FC-S Microtome manufactured by EICHERT), providing a sample for observation. As the sample for observation, a sample electronically stained by $RuO_4$ was produced. Morphology of a stacked lamellae domain formed of an achromatic crystalline phase and a stained amorphous phase was observed by TEM. By this observation, presence/absence of a crystalline domain over 100 nm and a size of a crystalline structure (a crystal lamellae) were confirmed.

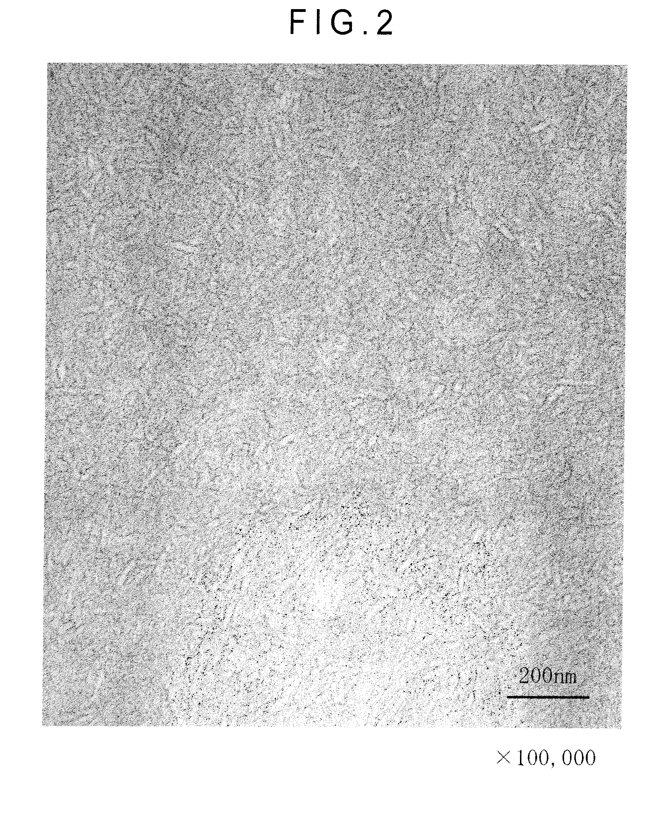

Specifically, as shown in a photograph of a TEM observation image at hundred thousand-fold magnification of Fig. 2, at least one of a crystalline granular domain and a crystalline plate domain (a crystal lamellae) which show a bright contrast exists in entire visible areas. Between the domains, relatively narrow and dark contrast areas exist.

Measurement was conducted at any 20 points to obtain a size of the crystal lamellae. The measured lengths in a short axis direction and a long axis direction were respectively defined as a thickness and a width of the crystal lamellae. An average value of the thickness was obtained. The minimum value and the maximum value of the width were obtained since the width had a large numerical distribution. In some cases, a structure domain in which the crystal lamellae were stacked (a stacked lamella domain) was recognized.

Conditions of sample pre-treatment are as follows.

Sample Pretreatment: electronic stain by $RuO_4$

TEM Observation: Transmission Electron Microscope H-800 manufactured by Hitachi Ltd.; accelerating voltage being 200 kV; magnification being two thousand-fold to two hundred thousand-fold

[Wide-Angle X-ray Diffraction (WAXD)]

Measurement was conducted with reference to a method used by T. Konishi et al (Macromolecules, 38,8749, 2005).

In an analysis, a peak separation of each of an amorphous phase, a mesophase and a crystalline phase on X-ray diffraction profile was conducted and an existence ratio was obtained from a peak area of each phase.

(Crystallinity Degree)

-Density

A density was measured according to JIS K 7112 D. A part of a molded article was cut into an approximately 5-mm cube and put into a density gradient tube at 23 degrees C (product name: RMB-6 type manufactured by IKEDA SCIENTIFIC Co., Ltd.). After 15 minutes, the position of the sample was read and the density thereof was obtained by a standard curve. Measurement was conducted in n=3. The measured values rounded to last four digits were simply averaged to provide a reported value.

- Crystallinity Degree

A crystallinity degree was calculated by proportional distribution of the measured density value of each sample according to a formula (4) below.

$$[\text{Crystallinity Degree}] = (d_c/d)*(d-d_a)/(d_c-d_a)*100(\%)\cdots(4)$$

d: density of a sample

$d_c$: density of I-PP $\alpha$ crystal in perfect crystal state ($936 kg/m^3$)

$d_a$: density of I-PP in amorphous state ($850 kg/m^3$)

[Property Evaluation of I-PP Molded Articles]

-Measurement of Melting Temperatures (Melting Points)

A scanning thermal microscopy (hereinafter, abbreviated as micro thermal analysis) was conducted on a cut-out sample from the molded article, in which a micro thermal analysis instrument μ TA2990 (Product Name: manufactured by TA Instruments) was used, thereby measuring a melting temperature. Specifically, in a temperature differential curve of μ DTA curve, change in inclination in a range of approximately 50 degrees C to approximately 200 degrees C was recognized as three-stage change.

(1) a range of substantially constant inclination relative to a base line in a range of 50 degrees C to a higher temperature
(2) a range of rapidly-changed inclination
(3) a range of substantially constant inclination relative to a base line in a range of 200 degrees C to a lower temperature

At this time, the ranges of the above (1) to (3) were respectively approximated by a straight line. A midpoint between two intersection points of the approximated straight lines was determined as a melting point.

■ Elastic Modulus

By using an i-PP molded article having a sample width of 4.0 mm, an elastic modulus was measured by using a dynamic solid viscoelasticity testing instrument (product name: DMS 6100 manufactured by Seiko Instruments Inc). A storage modulus was set to provide a span-to-span distance of 20 mm. At a frequency of 1.0 Hz, the storage modulus was measured from 10 degrees C to the melting temperature of the sample at heatup rate of 2.0 degrees/minute, in which storage moduli at 23 degrees C, 80 degrees C and 120 degrees C were obtained.

■ Transparency (Haze)

As an index of transparency, a haze value was measured according to JIS K7136 by using a Haze Meter (product name: NDH 200 manufactured by NIPPON DENSHOKU INDUSTRIES CO., LTD.).

(Flowing)

A flowing was carried out as follows. As a raw material, homo isotactic polypropylene (i-PP) having an isotactic pentad fraction of 97 mol% (product name: prime polypro F-300SV (MFR 3 g/10 minutes, lot. 2602671)) manufactured by Prime Polymer Co., Ltd.) or having an isotactic pentad fraction of 92 mol% (product name: prime polypro E-304GP (MFR 3 g/10 minutes, lot. 2605231)) manufactured by Prime Polymer Co., Ltd.) was used.
The i-PP polymer was plasticized and molten by using a full-flight single-screw extruder and the molten i-PP was extruded from a T-die. The molten i-PP was inserted between a metal belt and a metal roller. While maintaining the pressure between the belt and the roller at 30 kg/cm and a planar pressure at approximately 0.1 MPa, the molten i-PP was pulled and wound so as to have a predetermined thickness.

(Rapidly-Cooling)

In the rapidly-cooling, the same type of cooling apparatus as an apparatus in which a metal belt and a metal roller were combined as shown in Fig. 1 was used. The molten polypropylene was cooled by a refrigerant at 20 degrees C.

Examples 1, 4, 5, 7, 8, and 9 (conditions A of melt extrusion, flow and rapid-cooling by a laboratory machine)

Specifically, an extrusion by a single screw extruder was carried out under the following conditions.

- Screw: Full-flight type, a compression ratio: 3.5, 65 mmφ
- Screw rotating speed: 70 rpm (a constant extruded amount of approximately 45 kg/hr)
- T-die: Coat hanger type (width of 800 mm, lip gap of 1.5 mm)
- Extrusion temperature: 240 degrees C
- Extrusion speed ($V_0$): 0.57 m/min
- Air gap (La): 150 mm

A cooling by the metal belt and the metal roller was carried out under the following conditions.

• Temperature: 20 degrees C
• Roller diameter: 270 mm$\varphi$
• Roller angle of a belt contacting portion: 50 degrees

Herein, the roller angle of belt contacting portion is a total value of θ1 and θ2 disclosed in Fig. 1 of JP-A-9-136346.

• Pulling speed (V): (1.2/t)m/min

Herein, t represents a sheet thickness (mm).

• Cooling time: 1.2 [sec] $\times$ t/0.1

Herein, the cooling time was obtained by dividing a perimeter calculated from the winding angle by the average pulling speed.
The cooling temperature and the cooling time are shown in Fig. 1 with results of Examples described below.

Examples 2, 3, 6, 10, 11, 14, 15 and 16 (conditions B of melt extrusion, flow and rapid-cooling by a laboratory machine)

Specifically, an extrusion by a single screw extruder was carried out under the following conditions.

• Screw: Full-flight type, a compression ratio: 3.5, 65 mm$\varphi$
• Screw rotating speed: 125 rpm (an extruded amount of approximately 80kg/hr)
• T-die: Coat hanger type (width of 800 mm, lip gap of 2.0mm)
• Extrusion temperature: 240 degrees C
• extrusion speed ($V_0$): 1.2m/min
• Air gap (La): 150 mm

A cooling by the metal belt and the corresponding metal roller was carried out under the following conditions.

• Temperature: 20 degrees C
• Roller diameter: 270 mm$\varphi$
• Roller angle of a belt contacting portion: 50 degrees
• Pulling speed: (2.1/t) m/min

Herein, t represents a sheet thickness (mm).

• Cooling time: 0.68 [sec] $\times$ t/0.1

Herein, the cooling time was obtained by dividing a perimeter calculated from the winding angle by the average pulling speed.

Examples 12 and 13 (conditions C of melt extrusion, flow and rapid-cooling by a commercial machine)

Specifically, an extrusion by a single screw extruder was carried out under the following conditions.

• Screw: Full-flight type, a compression ratio: 3.5, 65 mm$\varphi$
• Screw rotating speed: 86 rpm (approximately 540 kg/hr)
• T-die: Coat hanger type (width of 1,100 mm, lip gap of 1.5 mm)
• Extrusion temperature: 240 degrees C
• Extrusion speed ($V_0$): 6.1 m/min
• Air gap (La): 250 mm
A cooling by the metal belt and the corresponding metal roller was carried out under the following conditions.
• Temperature: 18 degrees C
• Roller diameter: 600 mm$\varphi$
• Roller angle of a belt contacting portion: 50 degrees
• Average pulling speed: (9.0/t) m/min

Herein, t represents a sheet thickness (mm).

• Cooling time: 0.367 [sec] $\times$ t/0.1

Herein, t represents a sheet thickness (mm).

(Heat-Treating)

A sheet-shaped molded article having a predetermined thickness obtained in the extrusion rapidly-cooling was used as a raw sheet on which a heat-treating was carried out. The heat-treating was carried out under either one of two heat-treatment conditions A and B described below.

- Heat treatment A: After rapidly-cooling, the raw sheet was directly subjected to the heat treatment.

- Heat treatment B: The heat treatment was conducted using a heater, followed by thermoforming using a thermoforming machine.

In the heat treatment A, the heat treatment was conducted while maintaining the shape of the sheet-shaped molded article. Specifically, either one of the following methods was used.

- Heating-up in a hot-air furnace: An air-blower circulating dryer CFD-35H (product name) manufactured by ALP Co., Ltd. was used as a hot-air furnace, where the sheet-shaped molded article obtained by melt extrusion and rapid-cooling was left still, thereby applying heat treatment. An actual temperature in the hot-air furnace was employed as the heat treatment temperature. The actual temperature in the hot-air furnace and the following heat-label display temperature were consistent.
- Heating-up by infrared radiation (IR): A heating machine of a one-shot molding machine used for thermoforming (product name: FM-3M/H manufactured by Sinos Co., Ltd.) was used as a heat-treatment apparatus, where a panel temperature was set at 500 degrees C and heat treatment was applied for a predetermined time. A five-point-display heat label manufactured by MICRON Corp. was previously attached to a surface of a sheet-shaped molded article to be heated. After the heat treatment, the temperature was read. This heat label can measure a temperature every 5 degrees C or 6 degrees C intervals. Accordingly, the actual temperature may be higher than the measured temperature by a maximum of 4 degrees C to 5 degrees C.
Table 1 shows Examples in which a sheet-shaped molded article obtained by the melt extrusion and the cooling was heat-treated by the heat treatment A using the hot-air furnace or IR.

In the heat treatment B, after the same treatment as the heat treatment A was conducted, a thermoforming was further conducted according to either or both of the following methods.

• Laboratory Test by a research machine

After the heat treatment A, vacuum pressure molding was conducted under a pressure of 0.45 MPa by a round cup mold having 60 mmφ and a thickness of 30 mm. The molding process was actually conducted for a time shorter by 0.5 second to 1.0 second than a heatup time which largely impairs transparency of the molded article.

• Laboratory Test by a commercial machine

1. Food Pack A Mold

A food pack A mold (short side 120 mm $\times$ long side 175 mm, lid depth: 15 mm, container depth: 30 mm), which is designed for a convenience store based on a PP sheet having a 0.35-mm thickness, was used for thermoforming by a continuous vacuum pressure thermoforming machine, CM-1 (product name) manufactured by Sumitomo Heavy Industries, Ltd. A molding cycle was determined in such a manner that transparency of the molded article was not impaired by adjusting the molding cycle and the heatup time became favorable for reproduction of the mold shape. Subsequently, molding was conducted under a pressure of 0.48 MPa.

2. Pasta Mold

A round container mold (180 mmφ, a depth of 35 mm), which was designed based on a PP sheet having a 0.30-mm thickness, was used.

3. Food Pack B Mold

A container mold (90 × 140 × 30mm (depth)), which was designed based on a PP sheet having a 0.30-mm thickness, was used.

Table 2 shows Examples and Experimental Results described below. In the Examples, after the heat treatment A (using the melt extrusion, the rapidly-cooling and the hot-air furnace) and the heat treatment B (using IR), thermoforming was conducted by using any one of the above molds to finally provide various containers.

[Example 1]

i-PP having an isotactic pentad fraction of 97 mol% was used as a raw material. Under the above extrusion and rapid cooling conditions A, the molten i-PP was extruded at a pulling speed (V) of 6.0 m/min. Subsequently, the extruded molten i-PP was inserted between a metal belt and a metal roller which were maintained at 20 degrees C to be cooled for 2.4 seconds, thereby providing a rapidly-cooled sheet having a 0.2 mm thickness. At this time, a Draw Down Ratio (Rd) was 10.5 and a stretching-strain rate ▲ε▼ was 0.60sec$^{-1}$.

Thus obtained rapidly-cooled sheet was left still for three minutes in the hot-air furnace that was kept at 140 degrees C. By this heat treatment, a sheet-shaped molded article having a high crystallinity degree was obtained. On thus obtained sheet-shaped molded article, a higher order structure analysis and properties evaluation were conducted.

As a result, the crystallinity degree measured by the density method was 77%. As result of observation by using POM at magnification of 300-fold to 400-fold and TEM at magnification of 2000-fold and 20000-fold, though a crystalline stacked lamellae domain was partially recognized, no stacked lamellae domain having a size over 100 nm was recognized. In addition, measurement results of total haze, light transmissivity and storage modulus at 23 degrees C, 80 degrees C and 120 degrees C are shown in Table 1.

As a result of WAXD pattern analysis, which is not shown in Table 1, no mesophase was recognized and a crystalline phase was substantially formed of α crystal, where α crystal and an amorphous phase occupied 85% and 15% respectively. Moreover, as a result of observation by TEM at magnification of a hundred thousand-fold or two hundred thousand-fold, a granular unstained (crystalline) domain of approximately 10 to 20 nm and a crystal lamellae having a 8-nm thickness and a maximum width of 35 nm were recognized. Further, as a result of SAXS measurement, a long period was 19 nm and scattering intensity was uniform in a circumferential direction.

[Example 2]

A sheet-shaped molded article having a 0.35-mm thickness was obtained in the same manner as Example 1 except for, under the above extrusion and rapid cooling conditions B, the pulling speed of 5.5 m/min (in which the Draw Down Ratio (Rd) was 10.5 and a stretching-strain rate ▲ε▼ was 0.48sec$^{-1}$), cooling time of 4.2 seconds, and heat treatment for one minute at 150 degrees C. The result is shown in Table 1. In addition, α crystal and an amorphous phase occupied 82% and 18% respectively according to WAXD.

[Example 3]

A sheet-shaped molded article having a 0.35-mm thickness was obtained in the same manner as Example 2 except for heat treatment in a range of 50 degrees C to 150 degrees C over 30 minutes. A higher order structure analysis and properties evaluation were conducted in the same manner as the above. Results are shown in Table 1.

[Example 4]

A sheet-shaped molded article having a 0.40-mm thickness was obtained in the same manner as Example 1 except for the pulling speed of 3.0 m/min (in which the Draw Down Ratio (Rd) was 5.3 and a stretching-strain rate ▲ε▼ was 0.32sec$^{-1}$), and cooling time of 4.8 seconds. A higher order structure analysis and properties evaluation were conducted in the same manner as the above. Results are shown in Table 1. In addition, α crystal and an amorphous phase occupied 77% and 23% respectively according to WAXD.

[Example 5]

A sheet-shaped molded article having a 0.55-mm thickness was obtained in the same manner as Example 1 except for the pulling speed of 2.2 m/min (in which the Draw Down Ratio (Rd) was 3.7 and a stretching-strain rate ▲ε▼

was 0.17sec$^{-1}$), and cooling time of 6.6 seconds. A higher order structure analysis and properties evaluation were conducted in the same manner as the above. Results are shown in Table 1. In addition, α crystal and an amorphous phase occupied 92% and 8% respectively according to WAXD.

[Example 6]

A sheet-shaped molded article having a 0.35-mm thickness was obtained in the same manner as Example 2 except for heat treatment at 120 degrees C for 10 minutes. A higher order structure analysis and properties evaluation were conducted in the same manner as the above. Results are shown in Table 1.

[Example 7]

A sheet-shaped molded article having a 0.20-mm thickness was obtained in the same manner as Example 1 except that: the pulling speed was 6.0 m/min (in which the Draw Down Ratio (Rd) was 10.5 and a stretching-strain rate ▲ε▼ was 0.60sec$^{-1}$); heat treatment was conducted at IR panel temperature of 500 degrees C for 6.0 seconds and further until a surface temperature reached 127 degrees C; and the molded article was cooled in a flat mold having no recess in the thermoforming machine. A higher order structure analysis and properties evaluation were conducted in the same manner as the above. Results are shown in Table 1.

[Example 8]

A sheet-shaped molded article having a 0.30-mm thickness was obtained in the same manner as Example 1 except that: the pulling speed was 4.0 m/min (in which the Draw Down Ratio (Rd) was 7.0 and a stretching-strain rate ▲ε▼ was 0.38sec$^{-1}$); cooling time was 3.6 seconds; and heat treatment was conducted at IR panel temperature of 500 degrees C for 8.0 seconds and further until a surface temperature reached 138 degrees C. A higher order structure analysis and properties evaluation were conducted in the same manner as the above. Results are shown in Table 1.

[Example 9]

A sheet-shaped molded article having a 0.55-mm thickness was obtained in the same manner as Example 1 except that: the pulling speed was 2.2 m/min (in which the Draw Down Ratio (Rd) was 3.7 and a stretching-strain rate ▲ε▼ was 0.17sec$^{-1}$); cooling time was 6.6 seconds; and heat treatment was conducted at IR panel temperature of 500 degrees C for 15.0 seconds and further until a surface temperature reached 132 degrees C. A higher order structure analysis and properties evaluation were conducted in the same manner as the above. Results are shown in Table 1.

[Comparative Example 1]

Comparative Example 1 was conducted in the same manner as Example 8 until the rapidly cooled sheet was obtained under the extrusion and rapid cooling conditions A, in other words, except that no heat treatment was conducted. A higher order structure analysis and properties evaluation were conducted in the same manner as the above Examples. Results are shown in Table 2.

A crystallinity degree by a density method was 47%. No stacked lamellae domain over 100 nm existed. Total haze was 28%. Storage elastic moduli at 23 degrees C, 80 degrees C and 120 degrees C were respectively 1320 MPa, 310 MPa and 170 MPa (see Table 2). According to WAXD pattern analysis, which is not shown in Table 1, no α crystal was recognized. A mesophase and an amorphous phase occupied 54% and 46% respectively. As a result of TEM observation, crystal lamellae had a thickness of 8 nm and a width of 10 nm at minimum to 40 nm at maximum. Further, as a result of SAXS, a long period was 11 nm and scattering intensity was uniform in a circumferential direction.

[Comparative Example 2]

Comparative Example 2 was conducted in the same manner as Example 8 except for using i-PP having an isotactic pentad fraction of 92 mol%.

A crystallinity degree by a density method was 63%. No stacked lamellae domain over 100 nm existed. Total haze was 7%. Storage elastic moduli at 23 degrees C, 80 degrees C and 120 degrees C were respectively 2000 MPa, 600 MPa and 170 MPa (see Table 2).

[Comparative Example 3]

Comparative Example 3 was conducted in the same manner as Example 8 except that heat treatment was conducted at 230 degrees C for five minutes.

A crystallinity degree by a density method was 68%. A lot of spherulites over several μm that were formed of stacked crystal lamellae were recognized from observation by a polarizing microscope. An external appearance of the sample was whitened and opaque. Total haze was 60% or more (see Table 2). When heat treatment was conducted in a temperature range over the melting temperature defined above, for instance, at 155 degrees C or more at a heatup rate of 0.3 degrees C/second in a hot-air furnace or over 150 degrees C at a heatup rate of 20 degrees C/second by IR heating, an external appearance of the sample was also whitened and opaque in either case.

[Comparative Example 4]

Under the same extrusion and rapid cooling conditions C as in Examples 12 and 13, a rapidly cooled sheet having a 0.35-mm thickness was obtained. Subsequently, the obtained sheet was heat-treated for 10 seconds in a hot-air furnace kept at 130 degrees C to obtain a sheet-shaped molded article.

A crystallinity degree by a density method was 56%. No stacked lamellae domain over 100 nm existed. Total haze and storage modulus are shown in Table 2. In addition, as a result of WAXD analysis, α crystal and an amorphous phase occupied 53% and 47% respectively (see Table 2).

[Comparative Example 5]

Comparative Example 5 was conducted in the same manner as Comparative Example 1 except that an isotactic pentad fraction was 92 mol%.

A crystallinity degree by a density method was 48%. No stacked lamellae domain over 100 nm existed. Total haze was 17%. Storage elastic modulus and other properties are shown in Table 2. In addition, as a result of WAXD analysis, no α crystal existed and a mesophase and an amorphous phase occupied 50% and 50% respectively. As a result of TEM observation, crystal lamellae had a thickness of 7 nm and a width of 12 nm at minimum to 41 nm at maximum. Further, as a result of SAXS analysis, a long period was 11 nm and scattering intensity was uniform in a circumferential direction (see Table 2).

[Table 1]

| Item | Apparatus/testing machine | Testing content/item | Unit | Example 1 | Example 2 | Example 3 | Example 4 | Example 5 | Example 6 | Example 7 | Example 8 | Example 9 |
|---|---|---|---|---|---|---|---|---|---|---|---|---|
| Raw material PP | $^{13}$C-NMR | Pentad fraction | mol % | 97 | 97 | 97 | 97 | 97 | 97 | 97 | 97 | 97 |
| Rapid cooling | Extrusion/belt rapid cooling | Cooling | - | 20˚C 2.4 sec | 20˚C 3.6 sec | 20˚C 6.6 sec | 20˚C 2.4 sec | 20˚C 4.2 sec | 20˚C 4.2 sec | 20˚C 4.8 sec | 20˚C 6.6 sec | 20˚C 4.2 sec |
| Heat treating | Hot-air furnace | Heat treating I | - | N/A | N/A | N/A | 140˚C 3 min | 150˚C 1 min | 50-150˚C 1 min | 140˚C 3 min | 140˚C 3 min | 120˚C 10 min |
| | IR heating | Heat treating II | - | 500˚C 6 sec surface temp. 127˚C | 500˚C 8 sec surface temp. 138˚C | 500˚C 15 sec surface temp. 132˚C | N/A | N/A | N/A | N/A | N/A | N/A |
| Sheet molded article | | Thickness | mm | 0.2 | 0.30 | 0.55 | 0.2 | 0.35 | 0.35 | 0.4 | 0.55 | 0.35 |
| Higher order structure (molded article) | Density gradient tube | Crystallinity degree | % | 77 | 70 | 75 | 77 | 70 | 73 | 70 | 75 | 74 |
| | Presence/absence of stacked lamellae domain over | | | Absent | Absent | Absent | Absent | Absent | Absent | Absent | Absent | Absent |
| Transparency | Haze meter | Total haze | % | 1.5 | 9 | 38 | 1.5 | 15 | 17 | 25 | 42 | 16 |
| | | Light transmissivity | % | 93 | 92 | 91 | 92 | 91 | 92 | 92 | 92 | 92 |

(continued)

| Item | Apparatus/ testing machine | Testing content/item | Unit | Example 1 | Example 2 | Example 3 | Example 4 | Example 5 | Example 6 | Example 7 | Example 8 | Example 9 |
|---|---|---|---|---|---|---|---|---|---|---|---|---|
| Elastic modulus | Solid viscoelasticity | Storage modulus (23°C) | MPa | 2500 | 2700 | 2600 | 2780 | 2600 | 2400 | 2730 | 2700 | 2400 |
| | | Storage modulus (80°C) | MPa | 850 | 830 | 830 | 960 | 830 | 860 | 910 | 960 | 830 |
| | | Storage modulus (120°C) | MPa | 310 | 300 | 320 | 350 | 300 | 320 | 330 | 400 | 320 |

[Table 2]

| Item | Apparatus/ testing machine | Testing content/ item | Unit | Comparative Example 1 | Comparative Example 2 | Comparative Example 3 | Comparative Example 4 | Comparative Example 5 |
|---|---|---|---|---|---|---|---|---|
| Raw material PP | $^{13}$C-NMR | Pentad fraction | mol % | 97 | 92 | 97 | 97 | 92 |
| Rapid cooling | Extrusion/belt rapid cooling | Cooling | - | 20˚C 3.7 sec | 20˚C 3.6 sec | 20˚C 3.6 sec | 20˚C 1.2 sec | 20˚C 4.2 sec |
| Heat treating | Hot-air furnace | Heat treating I | - | N/A | N/A | 230˚C 5 min | 130˚C 10 sec | N/A |
| | IR heating | Heat treating II | - | None | 500˚C 8 sec surface temp. 138˚C | N/A | N/A | N/A |
| Sheet molded article | | Thickness | mm | 0.31 | 0.30 | 0.30 | 0.35 | 0.35 |
| Higher order structure (molded article) | Density gradient tube | Crystallinity degree | % | 47 | 63 | 68 | 56 | 57 |
| | Presence/ absence of stacked lamellae domain over 100nm | | | Absent | Absent | Present | Absent | Absent |
| Transparency | Haze meter | Total haze | % | 22 | 7 | 78 | 33 | 17 |
| | | Light transmissivity | % | 93 | 92 | 86 | 92 | 92 |
| Elastic modulus | Solid viscoelasticity | Storage modulus (23˚C) | MPa | 1320 | 2000 | - | 1800 | 1100 |
| | | Storage modulus (80˚C) | MPa | 310 | 600 | - | 500 | 240 |
| | | Storage modulus (120˚C) | MPa | 170 | 170 | - | 210 | 100 |

Now, the invention will be described in more detail with examples and comparisons regarding a thermoformed article.

[Example 10]

I-PP having an isotactic pentad fraction of 97 mol% was used as a raw material. Under the above extrusion and rapid cooling conditions B, the molten i-PP was extruded at a pulling speed (V) of 6.0 m/min (in which a Draw Down Ratio (Rd) was 5.2 and a stretching-strain rate ▲ε▼ was 0.58sec$^{-1}$) Subsequently, the extruded molten i-PP was inserted between a metal belt and a metal roller which were maintained at 20 degrees C to be cooled for 3.7 seconds. The extruded rapidly-cooled sheet having a 0.31 mm thickness obtained by the rapid cooling was heat-treated for 10 seconds in a hot-air furnace kept at 140 degrees C, thereby obtaining a raw sheet for thermoforming.

The raw sheet was thermoformed in a food pack A mold by 13.5 shot per minute (heating for 4.4 seconds) by a continuous thermoforming machine at IR panel temperature of 500 degrees C. At this time, a surface temperature of the sheet was 138 degrees C measured by a heat label.

On a central portion (a 0.21 mm thickness) of a lid of a thermoformed container thus obtained, a higher order structure analysis and properties evaluation were conducted. Results are shown in Table 3.

As shown in Table 3, the crystallinity degree by the density method was 78%. As result of TEM observation, though a crystalline stacked lamellae domain is partially recognized, no stacked lamellae domain having a size over 100 nm was recognized. In addition, results of total haze, light transmissivity and storage modulus at 23 degrees C, 80 degrees C and 120 degrees C are shown in Table 3. Moreover, although not shown in Table 3, as a result of WAXD pattern analysis, no presence of a mesophase was recognized and α crystal and an amorphous phase occupied 98% and 2% respectively. As a result of TEM observation, a granular unstained (crystalline) domain of approximately 10 to 20 nm and a crystal lamellae having a 15-nm thickness and a maximum width of 62 nm were recognized. Further, as a result of SAXS measurement, a long period was 27 nm and scattering intensity was uniform in a circumferential direction. Moreover, as a result of WAXD pattern analysis on the raw sheet for thermoforming, no presence of a mesophase was recognized and α crystal and an amorphous phase occupied approximately in halves. As a result of TEM observation, a granular unstained (crystalline) domain of approximately 10 to 20 nm and a crystal lamellae having a 10-nm thickness and a maximum width of 45 nm were recognized. Further, as a result of SAXS measurement, a long period was 10 nm and scattering intensity was uniform in a circumferential direction.

[Example 11]

A thermoformed container was obtained in the same manner as Example 10 except that the pulling speed was 5.5 m/min (in which the Draw Down Ratio (Rd) was 4.5 and a stretching-strain rate ▲ε▼ was 0.48sec$^{-1}$); cooling time was 4.2 seconds; a thickness of the extruded rapidly-cooled sheet was 0.35 nm; heat treatment was conducted for three minutes at 140 degrees C in a hot-air furnace and a sheet surface temperature was 132 degrees C after IR heating by a thermoforming machine. Evaluation results of the higher order structure and properties are shown in Table 3. The raw sheet for thermoforming was the same as Example 4 except for a thickness thereof.

[Example 12]

A thermoformed container was obtained in the same manner as Example 10 except that: under the extrusion rapid-cooling conditions C, the pulling speed was 30 m/min (in which the Draw Down Ratio (Rd) was 5.0 and a stretching-strain rate ▲ε▼ was 1.6sec$^{-1}$); cooling temperature was 18 degrees C; cooling time was 1.1 seconds; a thickness of the extruded rapidly-cooled sheet was 0.31 nm; heat treatment was conducted for 10 seconds at 130 degrees C in a hot-air furnace; a sheet surface temperature was 132 degrees C after IR heating by a thermoforming machine; and a pasta mold was used. Evaluation results of the higher order structure and properties are shown in Table 3. The raw sheet for thermoforming was the same as Example 4.

[Example 13]

A thermoformed container was obtained in the same manner as Example 12 except that: the pulling speed was 25.7m/min (in which the Draw Down Ratio (Rd) was 4.2 and a stretching-strain rate ▲ε▼ was 1.3 sec$^{-1}$); cooling temperature was 18 degrees C; cooling time was 1.1 seconds; a thickness of the extruded rapidly-cooled sheet was 0.35 nm; heat treatment was conducted for 10 seconds at 130 degrees C in a hot-air furnace; a sheet surface temperature was 132 degrees C after IR heating by a thermoforming machine; and a food pack B mold was used. Evaluation results of the higher order structure and properties are shown in Table 3. The raw sheet for thermoforming was the same as Example 12.

[Example 14]

The sheet shaped molded article having a 0.35 thickness in Example 6 was further heated by a one-shot thermoforming machine until the sheet surface temperature after IR heating was 127 degrees C, thereby obtaining a thermoformed container by using a cup mold. Evaluation results of the higher order structure and properties of a cup bottom (a 0.334-mm thickness) are shown in Table 3. The raw sheet for thermoforming was same as in Example 6.

[Example 15]

From a sheet-shaped molded article having a 0.35-mm thickness, which was the same as in Example 6 except for heat treatment of the extruded rapidly-cooled sheet at 140 degrees C for 40 seconds, a thermoformed container was obtained in the same manner as Example 14 except that the sheet surface temperature after IR heating by the one-shot thermoforming machine was 138 degrees C and a cup mold was used. Evaluation results of the higher order structure and properties of a cup bottom (0.322-nm thickness) are shown in Table 3. The raw sheet for thermoforming was the same as in Example 4 except for a thickness thereof.

[Example 16]

The sheet-shaped molded article having a 0.35-mm thickness in Example 3 was further heated by a one-shot thermoforming machine until the sheet surface temperature after IR heating was 127 degrees C, thereby obtaining a thermoformed container by using a cup mold in the same manner as in Example 14. Evaluation results of the higher order structure and properties of a cup bottom (0.326-mm thickness) are shown in Table 3. The raw sheet for thermoforming was the same as in Example 3.

[Comparative Example 6]

After i-PP having an isotactic pentad fraction of 92 mol% was formed into a rapidly-cooled sheet having a 0.35-mm thickness under the extrusion rapid-cooling conditions B, without heat treatment in a hot-air furnace, the sheet was formed into a container using a food pack A mold in the same manner as in Example 10 in a continuous thermoforming machine.
On a sample (a 0.25mm thickness) that was cut out from the central portion of the lid, a crystallinity degree by a density method was 65 %; no stacked lamellae domain over 100 nm existed; total haze , storage modulus and other properties are shown in Table 3. Although not shown in Table 3, as a result of TEM observation, crystal lamellae had a thickness of 11 nm and a width of 13 nm at minimum to 45 nm at maximum. In addition, as a result of WAXD analysis, $\alpha$ crystal and an amorphous phase occupied 95% and 5% respectively. Further, as a result of SAXS measurement, a long period was not recognized and scattering intensity was uniform in a circumferential direction. The raw sheet for thermoforming was the same as in Comparative Example 5 except for a thickness thereof
[Table 3]

| Item | Apparatus/ testing machine | Testing content/item | Unit | Example 10 | Example 11 | Example 12 | Example 13 | Example 14 | Example 15 | Example 16 | Comparative Example 6 |
|---|---|---|---|---|---|---|---|---|---|---|---|
| Raw material | $^{13}$C-NMR | Pentad fraction | mol% | 97 | 97 | 97 | 97 | 97 | 97 | 97 | 92 |
| Rapidly-cooling | Extrusion/belt rapid cooling | Cooling | - | 20˚C 2.4 sec | 20˚C 4.2 sec | 20˚C 4.2 sec | 20˚C 3.7 sec | 20˚C 4.2 sec | 20˚C 1.1 sec | 20˚C 1.1 sec | 20˚C 4.2 sec |
| Original sheet | | Thickness | mm | 0.35 | 0.35 | 0.35 | 0.31 | 0.35 | 0.3 | 0.35 | 0.35 |
| Heat treating | Hot-air furnace | Heat treating I | - | 120˚C 10 min | 140˚C 4 sec | 50-150˚C 30 min | 140˚C 10 sec | 140˚C 3 min | 130˚C 10 see | 130˚C 12 sec | N/A |
| | IR heating | Heat treating II | - | 500˚C 8.5sec; 127˚C Cup thermoforming | 500˚C 8.Ssec; 138˚C Cup thermoforming | 500˚C 10.5sec; 127˚C Cup thermoforming | 500˚C 4.4 sec; 138˚C Food pack A thermoforming | 500˚C 4.4 sec; 132˚C Food pack A thermoforming | 500˚C 4.4 sec; 132˚C Pasta thermoforming | 500˚C 6.0sec; 132˚C Food pack B thermoforming | 500˚C 4.4 sec; 138˚C Food pack A thermoforming |
| Thermoforming article | | Thickness | mm | 0.334 | 0.322 | 0.326 | 0.21 | 0.26 | 0.241 | 0.251 | 0.25 |
| Higher order structure (molded article) | Density gradient tube | Crystallinity degree | % | 70 | 76 | 75 | 78 | 77 | 76 | 78 | 65 |
| | Presence/ absence of stacked lamellae domain | | | Absent | Absent | Absent | Absent | Absent | Absent | Absent | Absent |
| Transparency | Haze meter | Total haze | % | 8 | 9 | 8.5 | 5.5 | 7.5 | 10 | 10 | 4.6 |
| | | Light transmissivity | % | 92 | 93 | 91 | 92 | 91 | 92 | 92 | 92 |

(continued)

| Item | Apparatus/ testing machine | Testing content/item | Unit | Example 10 | Example 11 | Example 12 | Example 13 | Example 14 | Example 15 | Example 16 | Comparative Example 6 |
|---|---|---|---|---|---|---|---|---|---|---|---|
| Elastic modulus | Solid viscoelasticity | Storage modulus (23˚C) | MPa | 2500 | 2600 | 2400 | 3000 | 3200 | 3300 | 3000 | 2520 |
| | | Storage modulus (80˚C) | MPa | 860 | 830 | 890 | 1000 | 1100 | 1100 | 930 | 720 |
| | | Storage modulus (120˚C) | MPa | 330 | 300 | 340 | 360 | 410 | 440 | 340 | 230 |

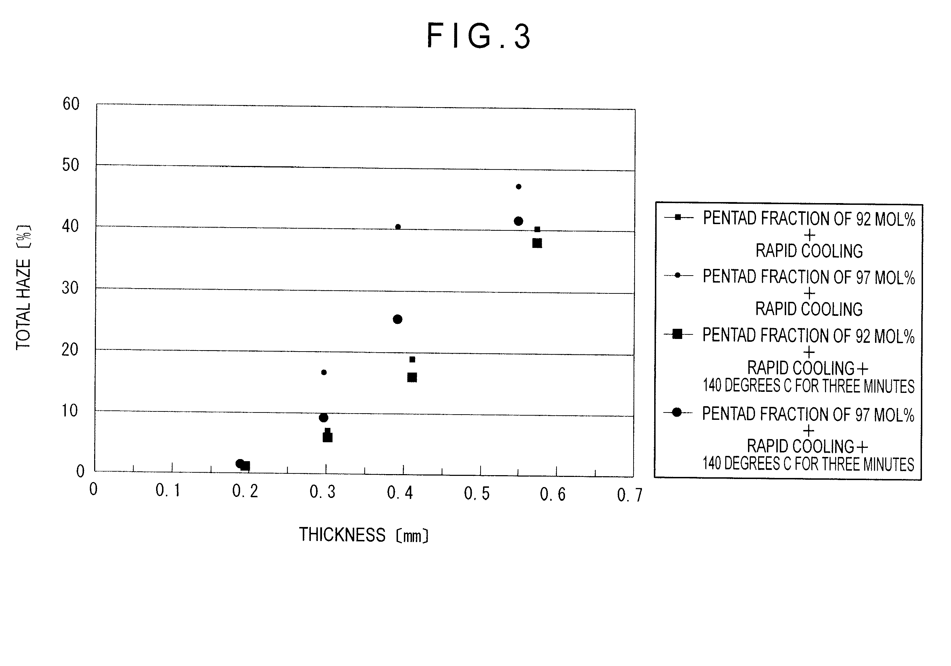

As shown in Fig. 3, when a certain heat treatment was conducted on an i-PP rapidly-cooled article having a practical thickness of 0.3 to 0.4 mm, a total haze of the i-PP rapidly-cooled article having an isotactic pentad fraction of 92 mol% slightly decreased, whereas a total haze of the i-PP rapidly-cooled article having an isotactic pentad fraction of 97 mol% decreased by approximately 40%. Accordingly, improvement of transparency was recognized.

In Fig. 3, "rapidly-cooling" is one of conditions A of melt extrusion, flowing and rapidly-cooling by a laboratory machine and "for three minutes at 140 degrees C" is a heating condition in a hot-air furnace.

A rapidly-cooled article using PP having an isotactic pentad fraction of 92 mol% is in contact with a heated metal roller and metal belt to improve the total haze. Such an improved total haze is conventionally attributed to improved surface gloss of a molded article. However, these results clearly show that an inner higher order structure was changed into a structure exhibiting a higher transparency by heat treatment when using PP having a higher tacticity expressed in terms of an isotactic pentad fraction of 97 mol%.

**Industrial Applicability**

A polypropylene molded article of the invention exhibits tacticity expressed in terms of an isotactic pentad fraction of 95 mol% or more. The polypropylene molded article is widely applicable as, for example, a sheet material and a container such as a folding box, bag, cup and pack.

**Claims**

1. A polypropylene molded article having tacticity expressed in terms of an isotactic pentad fraction of 95 mol% or more, comprising:

   a crystallinity degree by a density method of 70% or more; and
   substantially no crystalline domain over 100 nm.

2. The polypropylene molded article according to claim 1, wherein
   the crystalline domain is a granular crystal and a stacked lamellae domain in a range of 5 nm to 70 nm.

3. A polypropylene molded article having tacticity expressed in terms of an isotactic pentad fraction of 95 mol% or more, comprising:

   a crystallinity degree by a density method of 70% or more; and
   a structure substantially formed by a crystalline domain of 100 nm or less.

4. The polypropylene molded article according to any one of claims 1 to 3, wherein
   a crystalline phase and an amorphous phase are main constituents and a mesophase is not substantially contained.

5. The polypropylene molded article according to any one of claims 1 to 4, wherein
   the crystallinity degree by the density method is in a range of 70% to 90%.

6. The polypropylene molded article according to any one of claims 1 to 5, wherein
   a total haze is 35% or less when a thickness is in a range of 0.1 mm to 0.45 mm.

7. The polypropylene molded article according to any one of claims 1 to 6, wherein
   a storage modulus is in a range of 2,400 MPa to 5,000 MPa at 23 degrees C and in a range of 250 MPa to 650 MPa at 120 degrees C.

8. The polypropylene molded article according to any one of claims 1 to 7, wherein
   the isotactic pentad fraction is 97 mol% or more.

9. The polypropylene molded article according to any one of claims 1 to 8, wherein
   a propylene homopolymer having an isotactic pentad fraction of 95 mol% or more is used as a raw resin

10. The polypropylene molded article according to any one of claims 1 to 9, wherein
    the polypropylene molded article is sheet-shaped.

**11.** The polypropylene molded article according to any one of claims 1 to 9, wherein the polypropylene molded article is a thermoformed container having a space thereinside.

**12.** The sheet-shaped polypropylene molded article used for the thermoformed container according to claim 11, wherein a crystalline phase and an amorphous phase are main constituents and a mesophase is not substantially contained.

**13.** A method of manufacturing a polypropylene thermoformed article to manufacture a polypropylene molded article having tacticity expressed in terms of an isotactic pentad fraction of 95 mol% or more, comprising:

flowing a molten polypropylene having tacticity expressed in terms of an isotactic pentad fraction of 95 mol% or more;
rapidly-cooling, comprising: cooling the flowed molten-polypropylene obtained in the flowing to a temperature range of -200 degrees C to 50 degrees C; and keeping the cooled molten-polypropylene in the temperature range for 0.1 second to 100 seconds, thereby providing a rapidly-cooled polypropylene higher order structure of which main constituents are a mesophase or monoclinic crystal (a crystal) domain and an amorphous phase; and
heat-treating, comprising: heating the rapidly-cooled polypropylene higher order structure to a temperature range in which endothermic transition occurs and that is equal to or lower than a melting temperature of the rapidly-cooled polypropylene higher order structure; and keeping the heated rapidly-cooled polypropylene higher order structure for 0.1 second to 1000 seconds.

**14.** The method of manufacturing a polypropylene thermoformed article according to claim 13, wherein the molten polypropylene is rapidly cooled to a temperature range of -200 degrees C to 30 degrees C in the rapidly-cooling.

**15.** The method of manufacturing a polypropylene thermoformed article according to claim 13 or 14, wherein the temperature range in which endothermic transition occurs is 110 degrees C or more and the melting temperature of the polypropylene is 150 degrees C or less in the heat-treating.

**16.** The method of manufacturing a polypropylene thermoformed article according to any one of claims 13 to 15, wherein the heat-treating is followed by a thermoforming in which the heat-treated sheet-shaped polypropylene molded article obtained in the heat-treating is thermoformed.

# FIG.1

EP 2 168 997 A1

# FIG.2

200nm

×100,000

# FIG.3

EP 2 168 997 A1

<table>
<tr><td colspan="2" align="center">**INTERNATIONAL SEARCH REPORT**</td><td colspan="2">International application No.<br>*PCT/JP2008/062127*</td></tr>
</table>

A. CLASSIFICATION OF SUBJECT MATTER
*C08J5/00(2006.01)i, B29C47/14(2006.01)i, B29C47/88(2006.01)i, B29C71/02
(2006.01)i, B29K23/00(2006.01)n, B29L7/00(2006.01)n*

According to International Patent Classification (IPC) or to both national classification and IPC

B. FIELDS SEARCHED

Minimum documentation searched (classification system followed by classification symbols)
*C08J5/00, B29C47/14, B29C47/88, B29C71/02*

Documentation searched other than minimum documentation to the extent that such documents are included in the fields searched
```
Jitsuyo Shinan Koho        1922-1996   Jitsuyo Shinan Toroku Koho   1996-2008
Kokai Jitsuyo Shinan Koho  1971-2008   Toroku Jitsuyo Shinan Koho   1994-2008
```

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2005/92593 A1 (Idemitsu Unitech Co., Ltd.),<br>06 October, 2005 (06.10.05),<br>Claims; examples; comparative examples 2, 4, 5<br>& US 2007/0210480 A1 & CA 2560926 A<br>& KR 10-2006-0127222 A & CN 1938144 A | 1-16 |
| X | JP 2003-170485 A (Idemitsu Unitech Co., Ltd.),<br>17 June, 2003 (17.06.03),<br>Claims; examples<br>& US 2005/0067734 A1 & EP 1473138 A1<br>& WO 2003/047840 A1 & DE 60213666 D | 1-16 |
| X | JP 8-269266 A (Chisso Corp.),<br>15 October, 1996 (15.10.96),<br>Claims; Par. No. [0013]; examples; comparative<br>examples 6 to 8<br>(Family: none) | 1-16 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 September, 2008 (18.09.08) | Date of mailing of the international search report<br>30 September, 2008 (30.09.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/062127

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-246785 A  (Tokuyama Corp.),<br>12 September, 2000 (12.09.00),<br>Claims; Par. Nos. [0039], [0040]; examples<br>(Family: none) | 1-16 |
| Y | JP 2003-251681 A  (Idemitsu Unitech Co., Ltd.),<br>09 September, 2003 (09.09.03),<br>Claims; Par. Nos. [0012], [0022]; examples<br>& US 2005/0153011 A1    & EP 1491320 A1<br>& WO 2003/074255 A1 | 1-16 |
| Y | JP 11-172059 A  (Sumitomo Bakelite Co., Ltd.),<br>29 June, 1999 (29.06.99),<br>Claims; examples<br>(Family: none) | 1-16 |
| Y | JP 2004-66565 A  (Japan Polychem Corp.),<br>04 March, 2004 (04.03.04),<br>Claims<br>(Family: none) | 1-16 |
| Y | JP 10-193442 A  (Idemitsu Petrochemical Co., Ltd.),<br>28 July, 1998 (28.07.98),<br>Claims; examples<br>(Family: none) | 1-16 |

Form PCT/ISA/210 (continuation of second sheet) (April 2007)

## REFERENCES CITED IN THE DESCRIPTION

**Patent documents cited in the description**

- JP 2001213976 A
- JP 11172059 A
- JP 2004066565 A
- JP 3725955 B
- JP 2003170485 A
- JP 2004188868 A
- JP 2004 A
- JP 66565 A
- JP 11508501 T
- JP 9136346 A

**Non-patent literature cited in the description**

- *Macromolecules,* 1975, vol. 8, 687